# EUROPEAN PATENT SPECIFICATION

(11) **EP 3 452 283 B1**
(45) Date of publication and mention of the grant of the patent: **11.09.2019**
(21) Application number: 17866385.2
(22) Date of filing: 18.10.2017
(51) Int. Cl.: B32B 5/02, B32B 27/08, B32B 27/12, B32B 3/04, B32B 3/26

(54) **SELECTIVE PERFORATION, CONSTRUCTION, AND SEQUENCING OF PLIES FOR COMPOSITE LAMINATES AND HYBRIDS**
SELEKTIVE PERFORATION, KONSTRUKTION UND SEQUENZIERUNG VON LAGEN FÜR VERBUNDLAMINATE UND HYBRIDE
PERFORATION SÉLECTIVE, RÉALISATION ET FORMATION D'UNE SUCCESSION DE COUCHES POUR PIÈCES STRATIFIÉES COMPOSITES ET PIÈCES HYBRIDES

(30) Priority: 18.10.2016 US 201662409697 P
(43) Date of publication of application: 13.03.2019
(73) Proprietor: SABIC Global Technologies B.V., 4612 PX Bergen op Zoom (NL)
(72) Inventor: BOBBA VENKAT, Somasekhar, Pittsfield MA 01201 (US); KUMAR, RN, Ashwin, Bangalore 50087 (IN); MILNE, Craig, Lawrence, Pittsfield MA 01201 (US); JANIWARAD, Raghavendra, Bangalore 562107 (IN); SPEIRS, Kylie, Bangalore 562125 Karnataka (IN)
(74) Representative: Balder IP Law, S.L.
(86) International application number: PCT/US2017/057223
(87) International publication number: WO 2018/093520

(56) References cited:
- WO-A1-2013/167234
- WO-A1-2015/193795
- DE-A1-102004 035 759
- US-A1- 2013 309 438

## Description

### FIELD OF THE DISCLOSURE

This disclosure is directed to a process for producing composite and hybrid structures. This disclosure is further directed to a device for producing composite and hybrid structures.

### BACKGROUND OF THE DISCLOSURE

Various approaches to producing composite and hybrid parts utilize techniques such as laminating and over-molding. Such techniques are subject to a variety of defects.

For example, composite parts having complex and/or nonlinear geometries can incur aesthetic (e.g., wrinkles, fiber stretching, and the like) and structure defects (e.g., weak portions, de-bonding, delamination, structural failure, and the like) due to constrained movement of the fibers around changing geometrical portions of the part shape. Such defects can also induce high shear stresses and/or residual stresses in local regions. Moreover, the composite parts can typically also suffer from poor wet-out during lamination processes.

Similarly, hybrid parts employing two or more materials (e.g., a carbon fiber reinforced material and a plastic such as an overmolded engineering thermoplastic) can suffer from defects, particularly at edges where the two or more materials meet, such as de-bonding and/or delaminating between an interface of the two materials.

US Application No. 2013/0309438 to O'Reilly et al. is directed to producing contoured thermoplastic composite goods. The contours of the shaped goods made are produced employing a topo-slice stacking approach. The contours in the goods can vary in two dimensions across the height/depth of the article.

DE 102004035759 is directed to a method in which decorative material remains after overmolding of a first side between two closed mold halves, wherein a mold core of the second mold half is displaced relative to a main body of the second mold half such that a second mold space between the second side of decorative material and the second mold half forms. The two mold halves remain closed, with the second side of the decorative material in the second mold space being back-injected in a second injection process with a further plastic material.

These and other shortcomings are addressed by aspects of the present disclosure.

### SUMMARY OF THE DISCLOSURE

An aspect of the disclosure provides a laminated part including a plurality of plies arranged in layers. A first ply of the plurality of plies includes a first selective perforation feature of a first selective perforation pattern, and a second ply of the plurality of the plurality of plies is arranged adjacent the first ply. The second ply includes one of an unperforated construction and a second selective perforation feature.

Another aspect of the disclosure provides a method for producing a laminate. The method includes providing a first ply of a plurality of plies arranged in layers and perforating the first ply to form a first selective perforation feature according to a first selective perforation pattern. The method also includes arranging a second ply of the plurality of plies adjacent to the first ply, where the second ply includes one of an unperforated construction and a second selective perforation feature.

A further aspect of the disclosure provides a method of producing a hybrid part. The method includes providing a plurality of sequenced plies including a first ply and a second ply adjacent the first ply and shaping the first ply to a first dimension based on a geometry of the hybrid part, where the first dimension has a first end length. The method also includes shaping the second ply to a second dimension based on the geometry of the hybrid part, where the second dimension has a second end length unequal to the first end length. The method also includes overmolding a thermoplastic material onto the first ply and second ply.

A still further aspect of the disclosure provides a hybrid part including a plurality of sequenced plies. The plurality of sequenced plies includes a first ply and a second ply adjacent the first ply. The first ply is configured with a first dimension based on a geometry of the hybrid part, where the first dimension has a first end length, and the second ply configured with a second dimension based on the geometry of the hybrid part, where the second dimension has a second end length unequal to the first end length. The hybrid part also includes a thermoplastic material overmolded onto the plurality of sequenced plies.

Additional features, advantages, and aspects of the disclosure may be set forth or apparent from consideration of the following detailed description, drawings, and claims. Moreover, it is to be understood that both the foregoing summary of the disclosure and the following detailed description are exemplary and intended to provide further explanation without limiting the scope of the disclosure as claimed.

### BRIEF DESCRIPTION OF THE DRAWINGS

The accompanying drawings, which are included to provide a further understanding of the disclosure, are incorporated in and constitute a part of this specification, illustrate aspects of the disclosure and together with the detailed description serve to explain the principles of the disclosure. No attempt is made to show structural details of the disclosure in more detail than may be necessary for a fundamental understanding of the disclosure and the various ways in which it may be practiced. In the drawings:
FIGS. 1A, 1B, 1C, and 1D show typical exemplary processes for creating a composite laminate part and laminate parts produced thereby.
FIGS. 2A, 2B, and 2C show example hybrid structures.
FIG. 3 shows an example process for reducing defects in composite laminate parts according to the principles of the disclosure.
FIGS. 4A, 4B, and 4C show an example aspect of a plurality of plies including selective perforations according to the principles of the disclosure.
FIGS. 5A, 5B, 5C, and 5D show an example aspect of a template, plies, and part in accordance with selective perforation features and patterns according to the principles of the disclosure.
FIG. 6 shows an example process for asymmetrical edge ply sequencing according to the principles of the disclosure.
FIG. 7 shows an example of asymmetrical edge ply sequencing for a part edge according to the principles of the disclosure.
FIG. 8 shows a controller constructed according to the principles of the disclosure.
FIG. 9 illustrates an example process for single stage lamination and overmolding.
FIG. 10 illustrates an example apparatus for single stage lamination and overmolding.

### DETAILED DESCRIPTION OF THE DISCLOSURE

The aspects of the disclosure and the various features and advantageous details thereof are explained more fully with reference to the non-limiting aspects and examples that are described and/or illustrated in the accompanying drawings and detailed in the following description. It should be noted that the features illustrated in the drawings are not necessarily drawn to scale, and features of one aspect may be employed with other aspects as the skilled artisan would recognize, even if not explicitly stated herein. Descriptions of well-known components and processing techniques may be omitted so as to not unnecessarily obscure the aspects of the disclosure. The examples used herein are intended merely to facilitate an understanding of ways in which the disclosure may be practiced and to further enable those of skill in the art to practice the aspects of the disclosure. Accordingly, the examples and aspects herein should not be construed as limiting the scope of the disclosure, which is defined solely by the appended claims and applicable law. Moreover, it is noted that like reference numerals represent similar parts throughout the several views of the drawings.

The disclosure is directed to products utilizing selective perforation and/or ply sequencing techniques with, e.g., composite laminates and hybrids, as well as the techniques for producing products utilizing selective perforation and/or ply sequencing techniques. Ply as used herein may refer to a layer, such as a layer of a composite or laminate material.

As used herein, a "selective perforation feature" is a continuous cut, puncture, hole, or other interruption in a surface. The surface can be a solid surface, a woven surface that may include multiple discrete fibers, combinations thereof, or alternatives. As used herein, a "selective perforation pattern" is a pattern of one or more selective perforation features. A selective perforation pattern can be coordinated to a particular part geometry. Coordination to a particular part geometry need not mean the cuts match varying parts of a part geometry, as perforations not spatially matched in a one-to-one manner with the part may still deliver the intended benefits.

As used herein, a "staggered perforation arrangement" occurs where two or more selective perforation features and/or selective perforation patterns are offset from one another in successive perforated plies (which may or may not be adjacent to one another, or possess one or more intervening plies therebetween). As used herein, a "successive perforation arrangement" occurs where two or more selective perforation features and/or selective perforation patterns shift, stagger, or rotate, relative to a common frame of reference, in successive perforated plies (which may or may not be adjacent to one another, or possess one or more intervening plies therebetween), at intervals such that the perforations cover different areas of the frame of reference according to a predictable progression. As used herein, a "random perforation arrangement" means that the selective perforation features and/or selective perforation patterns in successive perforated plies (which may or may not be adjacent to one another, or possess one or more intervening plies therebetween) are arranged randomly or without deliberate alignment as to one another.

As used herein, "unperforated" means no additional perforations are created in accordance with a selective perforation feature or selective perforation pattern. Still, an unperforated ply (or other material) may still contain holes, voids, or other features which might be characterized as a perforation based on its original construction (e.g., ply containing space between fibers).

It is to be understood that the terminology used herein is for the purpose of describing particular aspects only and is not intended to be limiting. As used in the specification and in the claims, the term "comprising" can include the aspects "consisting of' and "consisting essentially of." Unless defined otherwise, all technical and scientific terms used herein have the same meaning as commonly understood by one of ordinary skill in the art to which this disclosure belongs. In this specification and in the claims which follow, reference will be made to a number of terms which shall be defined herein.

As used herein, "asymmetrical edge ply sequencing" means the providing or arrangement of plies of varying size, or of similar size but in different positions, such that the plies do not all share edges in a substantially common location relative to a common frame of reference. In an aspect of asymmetrical edge ply sequencing, each ply is a different dimension or non-aligned with its immediately adjacent plies. Alternative aspects may be arranged in different fashions.

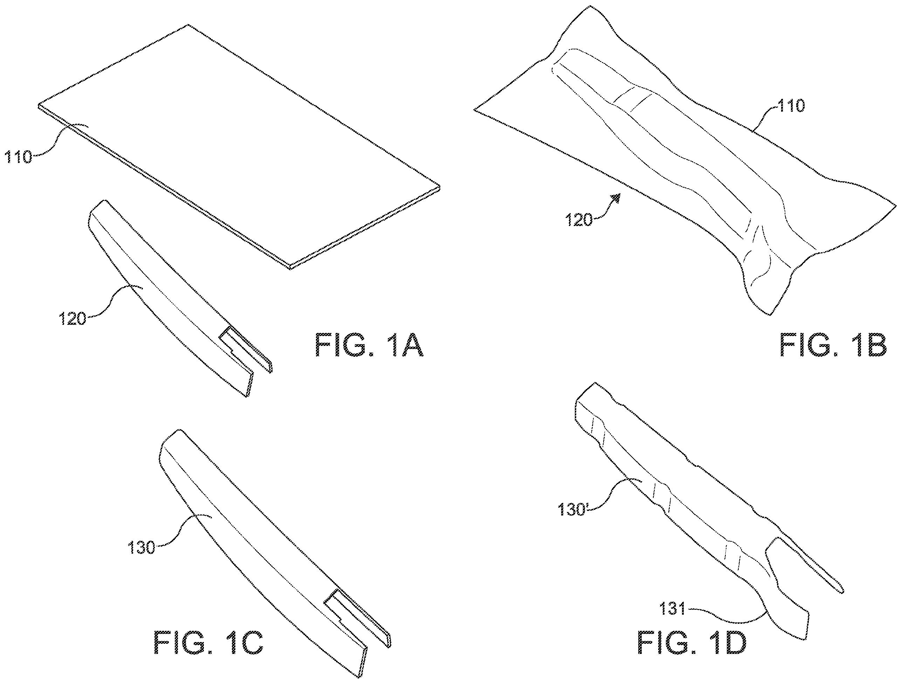

FIGS. 1A, 1B, 1C, and 1D show typical exemplary processes for creating a composite laminate part and laminate parts produced thereby. Specifically, FIG. 1A shows a laminate 110 to be applied to a part 120. FIG. 1B shows the laminate 110 being applied to part 120 in a conventional manner. Two possible outcomes of this process are shown by FIG. 1C and FIG. 1D. Specifically, FIG. 1C shows a defect-free part 130. The defect-free part 130 is the part desired for production. FIG. ID, however, shows a defective part 130' including a defect 131. The defect shown may occur as a result of bunching or stretching of fibers around the complex geometry of the part 120.

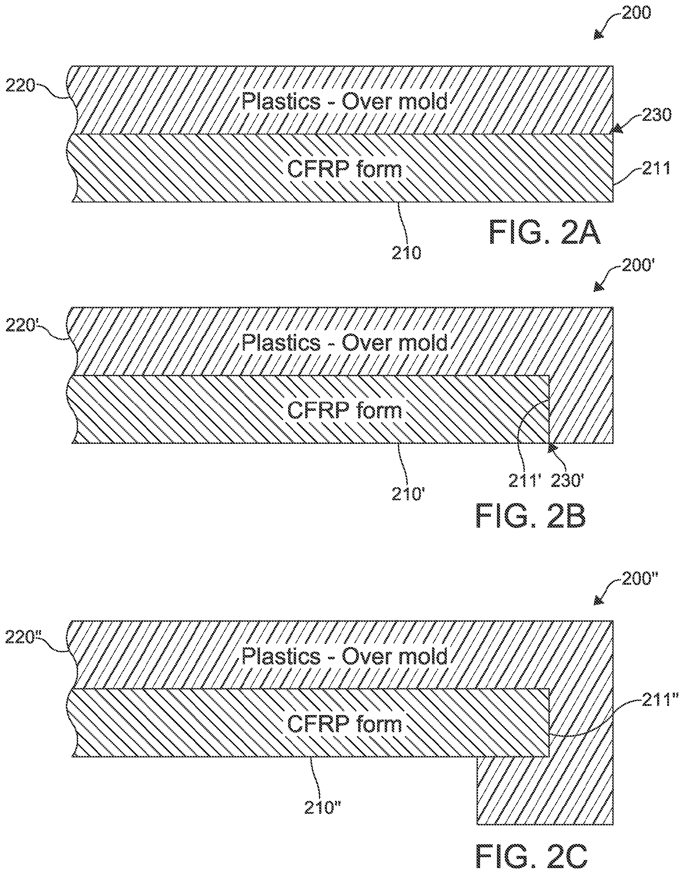

FIGS. 2A and 2B show typical example hybrid structures 200 and 200'. FIG. 2A specifically shows a hybrid structure 220 including a carbon fiber reinforced portion 210 and a thermoplastic overmold portion 220'. The thermoplastic overmold portion 220' extends between edges 211 and 212 without wrapping around the edges. With this construction, separation may more likely occur at a failure initiation zone 230 located at the interface of the carbon fiber reinforced portion 210 and the thermoplastic overmold portion 220', such as when the two materials de-bond and pull apart.

Similarly, FIG. 2B shows a hybrid structure 200' including a carbon fiber reinforced portion 210' and a thermoplastic overmold portion 220'. Carbon fiber reinforced portion 210' has edges 211' and 212', and the thermoplastic overmold portion 220' wraps around edge 211'. While this may reduce the risk of failure at the same location as in FIG. 2A, a failure initiation zone 230' still exists where the thermoplastic overmold portion 220' ends against carbon fiber reinforced portion 210'.

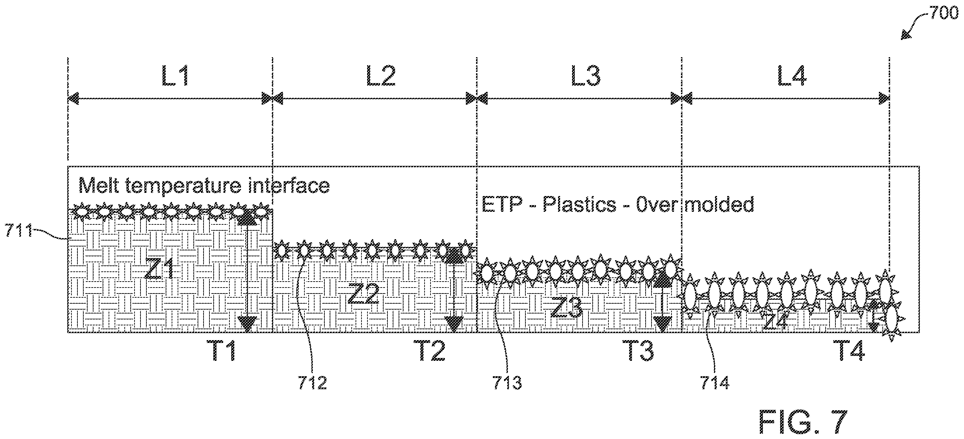

FIG. 2C shows a hybrid structure 200" as disclosed herein. Hybrid structure 200" includes a carbon fiber reinforced portion 210" and a thermoplastic overmold portion 220". Carbon fiber reinforced portion 210" has edges 211" and 212", and the thermoplastic overmold portion 220" wraps around edge 211". Because thermoplastic overmold portion 220" wraps around three sides of edge 211", the failure initiation zones described above are not present. Hybrid structure 200" can be, in aspects, created using a sequenced ply technique as described herein (*e*.*g*., FIG. 7).

While the examples of FIGS. 2A, 2B, and 2C are described as carbon fiber reinforced portions and thermoplastic overmold portions, it is understood that other materials or bonding techniques may be employed in other examples while still being subject to similar types of failures. As described below, the various aspects of the disclosure address the failure modes noted above along with other failure modes without departing from the scope of the disclosure and without limiting the applicability of techniques described herein.

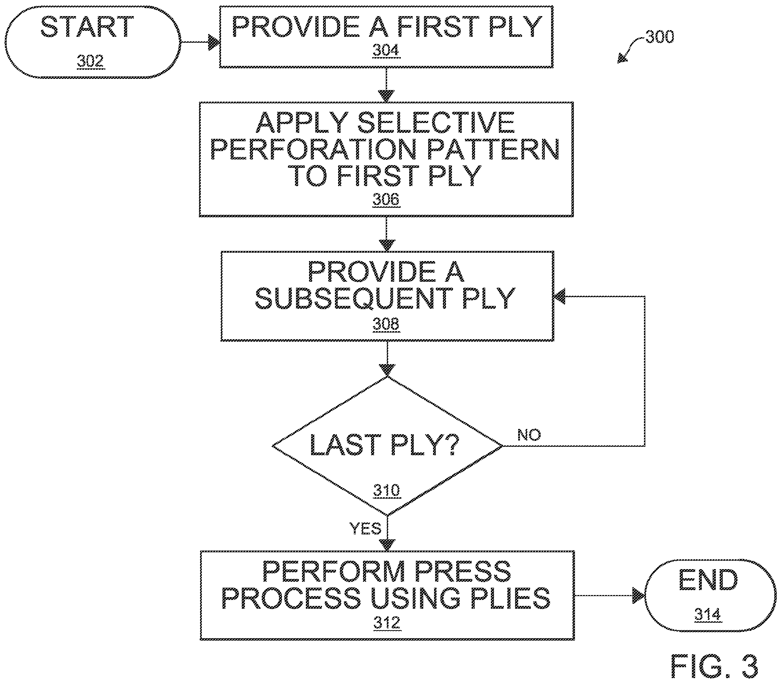

FIG. 3 shows an example process for reducing defects such as those shown in FIG. 1D. The process may be implemented as a methodology 300 that provides for one or more selective perforation features and/or one or more selective perforation patterns to be applied to one or more plies. Selective perforation features and selective perforation patterns may reduce fiber resistance within and between layers of the one or more plies, e.g., around curvature and/or edges of complex shapes, and reduces stretching or bunching resulting in aesthetic and structural defects. By introducing selective perforation features and/or selective perforation patterns in specific plies or weaves, shear stresses can be reduced while forming parts, thereby preventing some defects such as wrinkles or damaged fibers. Further, such constructions allow resin to more easily flow through layers for improved wet-out, and resin flush in in-plane directions can be minimized.

The methodology 300 begins at 302 and proceeds to 304 where a first ply is provided. At 306, a selective perforation feature and/or selective perforation pattern is created in the first ply by perforating the first ply. The selective perforation feature and/or selective perforation pattern can correspond to the geometry of a part by allowing particular fibers to displace with respect to other fibers and/or the part, or creating or enlarging voids between fibers.

Thereafter, at 308, a subsequent ply can be provided. The subsequent ply may be of similar or differing geometry as compared to the first ply. The subsequent ply may include no selective perforation features, be unperforated, include selective perforation features, and/or include selective perforation patterns different from those of the first ply. Alternatively, the subsequent ply may include selective perforation features and/or selective perforation patterns matching those of the first ply. In an aspect, adjacent plies do not include matching selective perforation features and/or selective perforation patterns. In an aspect, plies adjacent a perforated ply are unperforated and do not include any selective perforation features or selective perforation patterns. In this manner, structural integrity and coverage can be controlled while still providing flexibility through the plurality of plies as a group.

At 310, a determination is made as to whether the subsequent ply provided at 308 is the last ply among the plurality of plies. If not, methodology 300 returns to 308 where additional subsequent plies can be provided (and, in aspects, perforated). If the determination at 310 returns positive, the methodology 300 proceeds to 312 where a press process is performed using the plies. The press process can employ heat and pressure to form a final shape from the plurality of plies, either as a standalone piece or part of a larger product. A static press such as that described below or any other appropriate machinery may be employed to complete a production process utilizing the plurality of plies. During this process, perforated plies permit greater compliance of form and wet-out to reduce, prevent aesthetic or structural defects, or otherwise improve part construction.

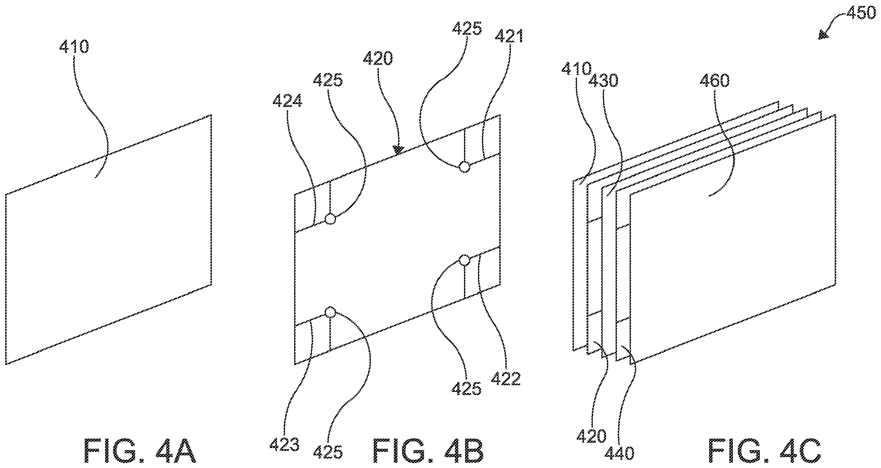

FIGS. 4A to 4C shows an example aspect of a plurality of plies including unperforated plies and plies having selective perforation features and/or selected perforation patterns. FIG. 4A illustrates an example ply 410 that is unperforated with no selective perforation feature or selective perforation pattern. FIG. 4B shows selective perforations 421-424 in a ply 420, involving linear cuts at the corners of the rectangular ply 420. Although the selective perforations 421-424 in the ply 420 are shown as a linear cuts, any type of perforation is contemplated including, for example, aperture shaped perforations, zigzag shaped perforations, curved shaped perforations, partial perforations, and the like. Additionally, although the selective perforations 421-424 in the ply 420 are shown as being symmetrical, non-symmetrical shaped perforations are contemplated as well. Moreover, the selective perforations 421-424 may be formed in the rectangular ply 420 such that there is at least one uncut portion 425. The uncut portion 425 may be utilized in order to keep the ply 420 as a single piece construction.

FIG. 4C shows a laminate structure 450 including the perforated ply 420 and other plies 410, 430, 440, and 460 alternatingly perforated in a selective manner to create the laminate structure 450 including selective perforation patterns in plies. In this regard, the laminate structure 450 is shown with a top ply 460 being unperforated, a middle ply 430 being unperforated, and the ply 410 being unperforated with the perforated plies 420, and 440 arranged therebetween. It should be noted that numerous other laminate structures can be formed consistent with the disclosure including any one or more plies having one or more selective perforation features, any one or more plies having selective perforation patterns, and any one or more plies being unperforated.

Moreover, the laminate structure 450 is shown having plies 420 and 440 having selective perforations 421-424 arranged in a consistent overlapping manner. It should be noted, that plies 420 and 440 may include a staggered perforation arrangement. Likewise, it should be noted that plies 420 and 440 may include a random perforation arrangement. Additionally, although each of the plies is shown as having the same dimensions, one or more of the plies may have different dimensions.

While selective perforations 421-424 are shown in a pattern having an each-ply alternating arrangement - if odd plies are unperforated, even plies are perforated - any pattern or ratio can be employed. For example, two unperforated plies may follow a perforated ply or vice versa. Perforated and unperforated plies may be provided in ratios of three to one, four to one, five to one, one to three, one to four, one to five, or any other ratio. In an aspect two or more patterns of plies may be employed. For example, in a single laminate structure 450, in a first section of plies, two unperforated plies may be arranged between each pair of perforated plies, and in a second section of plies, one unperforated ply may be arranged between each pair of perforated plies. The perforations can vary between respective perforated plies and/or sections of plies. An extensive variety of additional patterns and/or arrangements will be appreciated in view of the disclosures herein.

Further, while laminate structure 450 is shown as five plies, and other portions herein describe laminate structures in terms of one, two, three, or more plies, any number of plies can be utilized in an aspect. Six, ten, twenty, and larger or smaller numbers of plies can be utilized in various aspects without departing from the scope of the disclosure.

Additionally, while selective perforations 421-424 are shown as continuous cuts, it is understood perforation alternatives can be employed. For example, a "broken line" type cut, alternating between perforated and unperforated lengths along the line of cut can be used. Other perforation patterns can be employed as well, and FIG. 4 is illustrated as such for ease of explanation and not to limit the scope of the disclosure.

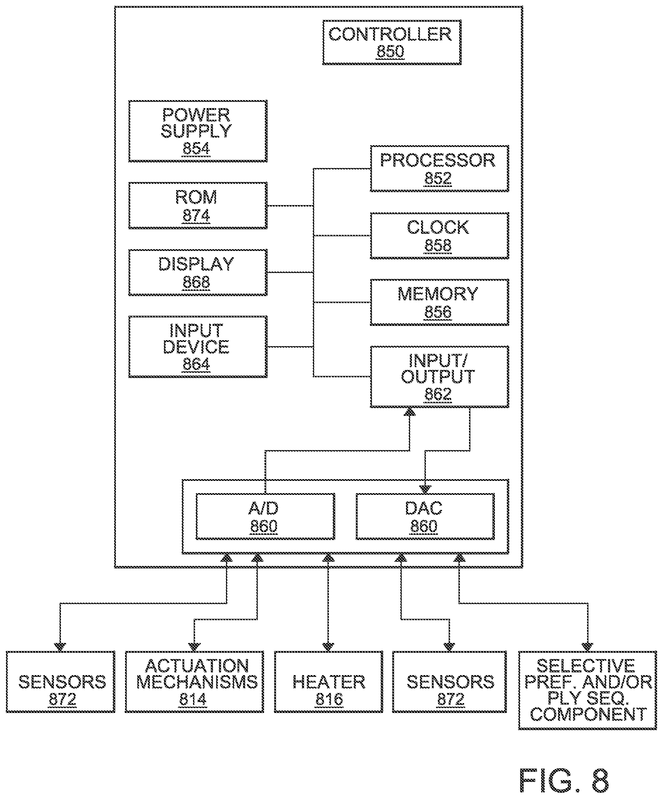

Once the laminate structure 450 is formed, laminate structure 450 may be heated to form a final shape in, for example, a static press. The static press may include a hot platen as part of an upper structure. The static press further may include another hot platen as part of a lower structure. The hot platen may be heated by a heater implementing any known heating technology including a source of heated fluid such as hot air, hot water, steam, hot oil, and the like. The static press may further be implemented with an actuation mechanism to move one or more of the hot platens towards and away from one another. The actuation mechanism may be implemented as a hydraulic actuator, a pneumatic actuator, an electromagnetic actuator, or the like. If a hydraulic actuator is utilized, the hydraulic actuator may include a hydraulic cylinder and a source of pressurized hydraulic fluid configured as a hydraulic system. If a pneumatic actuator is utilized, the pneumatic actuator may include a pneumatic cylinder and a source of pressurized pneumatic fluid configured as a pneumatic system. If an electromagnetic actuator is utilized, the electromagnetic actuator may include a solenoid and a source of electrical power to operate the solenoid configured as an electromagnetic system. Other implementations are contemplated as well. The static press may further include an area to receive the plies arranged below the plate of the upper structure and above the plate of the lower structure. The static press may be controlled by a controller illustrated in FIG. 8.

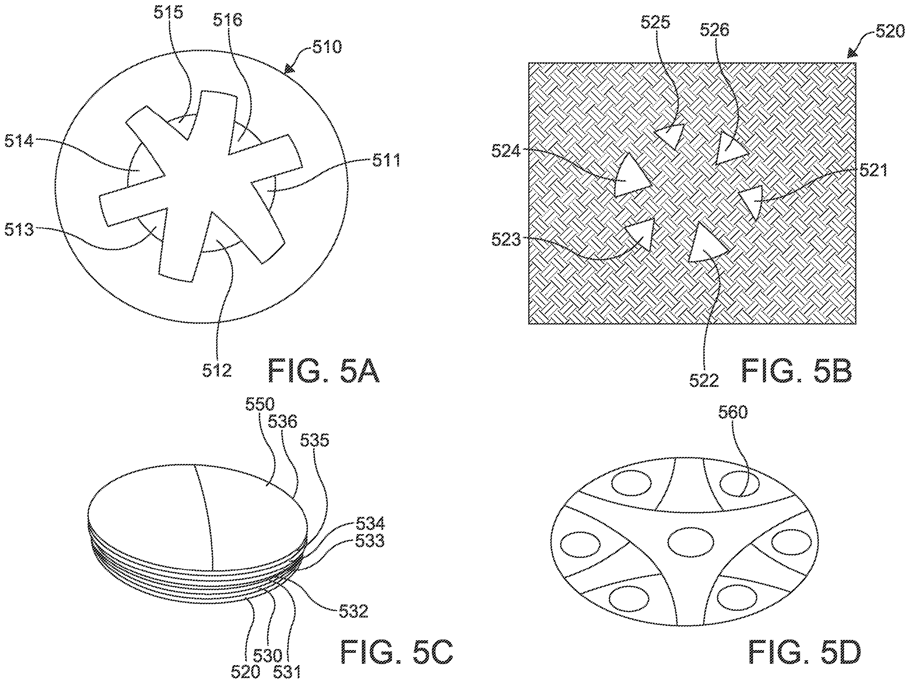

FIGS. 5A to 5D show further details relating to selective perforation. FIG. 5A illustrates a template 510 for creating a selective perforation pattern in one or more plies. Template 510 includes selective perforation feature guides 511-516 which are coordinated to geometries for parts to which plies so perforated will be applied. Template 510 is applied to a ply and perforations created through selective perforation feature guides 511-516 to ensure appropriate selective perforation patterns are applied to plies.

FIG. 5B shows a portion of a ply 520 including selective perforation features 521-526 defining a selective perforation pattern in the ply 520. Selective perforation features 521-526 are matched to the selective perforation feature guides 511-516 of the template 510, and coordinate with the geometry of finished part 560.

FIG. 5C shows the ply 520 stacked with a plurality of plies 530-535 (any one of which may be unperforated or perforated with a matching or different selective perforation pattern in comparison with ply 520) as unfinished part 550 and coordinated to finished part 560 stacked. In an aspect, the ply 520 and the plurality of plies 530-535 can include three perforated and four unperforated plies. Alternatives can be utilized in varying aspects. Once applied, the finished part 560 can be completed with reduced or no defects based on the selective perforations of ply 520 and, in aspects, other plies among plurality of plies 530-536.

Finished part 560 can be completed using, e.g., a press such as a static press described herein. The press can provide heat and pressure used for processing the plies from plurality of plies 520 and 530-535 into finished part 560, comprised exclusively of the plies, or comprised of the plies and other materials or parts in an alternative arrangement.

While various selective perforation features and/or selective perforation patterns, shapes of plies or ply layers, sizes of plies or ply layers, numbers of plies and/or ply layers have been shown, it is appreciated that any arrangement, shapes, sizes, quantities, or qualities can be utilized with the above details in furtherance of reducing defects in lamination through coordinating selective perforation.

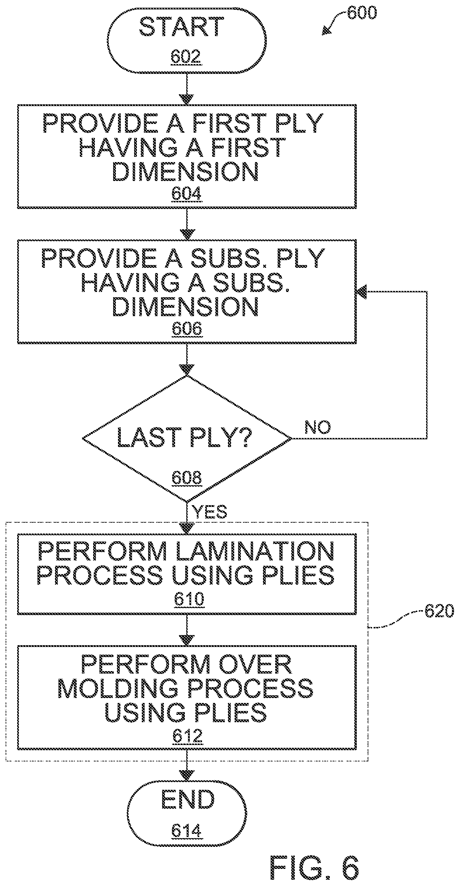

FIG. 6 shows an example process for asymmetrical edge ply sequencing. Asymmetrical edge ply sequencing can be used to reduce defects such as those described with respect to FIGS. 2A and 2B. The process may be implemented as a methodology 600 that begins at 602 and proceeds to 604 where a first ply having a first dimension is provided. Thereafter, at 606, a subsequent ply having a subsequent dimension is provided. Two or more plies can be provided in this fashion, with at least one arrangements and/or dimension varying such that all plies (of, e.g., a thermoplastic overmold layer) do not end along a common line relative to a common frame of reference, thereby varying their bonding locations and characteristics.

At 608, a determination is made as to whether the last ply has been provided. If not, the methodology 600 returns to 606 where additional plies can be provided. If so, the methodology 600 proceeds to 610 where a lamination process is performed. The laminating process may employ, for example, a laminating machine configured to receive asymmetrical plies. Thereafter, at 612 an overmolding process is performed. The overmolding process may employ, for example, a molding machine configured to receive the asymmetrical plies as described hereafter. Heat and pressure (or support) can be provided to shape the plies and overmolded part during the process. The asymmetrical plies are through this process bonded together and to the part, with most rapid heating and cooling occurring at the thinnest portions of plurality of plies.

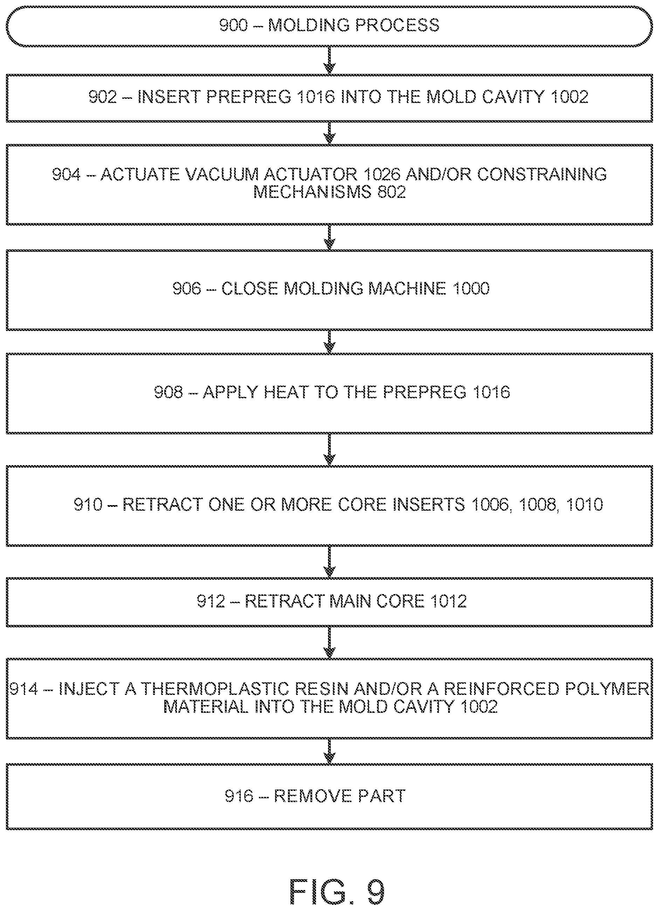

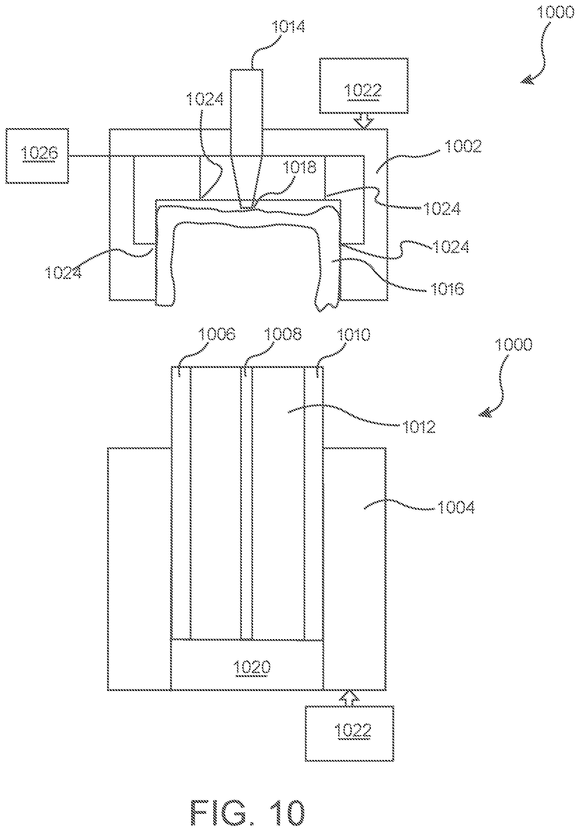

In an aspect, the laminating and overmolding processes can be completed using a single stage laminating and overmolding machine, consolidating steps 610 and 612 into sub-method 620. More particularly, a hybrid composite part can be made of continuous fiber reinforced laminates overmolded with plastics in a single apparatus. The apparatus can include a mold cavity configured to receive a prepreg material and an injection of additional material. The apparatus can further include a mold core having a main core that is configured to move with respect to the mold core. The main core is moved using an actuator such that it takes a first position to receive the prepreg material, and a second material to receive the injection. This can reduce the footprint and amount of machinery or labor required to produce hybrid composite parts. An example method employing a single stage apparatus and an example apparatus for single stage laminating and overmolding are shown in FIGS. 9 and 10.

Whether lamination and overmolding are performed in a single stage or using separate apparatuses, thereafter, at 614, methodology 600 ends.

FIG. 7 shows an example of asymmetrical edge ply sequencing for a part edge 700. Part edge 700 includes asymmetrical plies 711-714 shown to have asymmetrical lengths resulting in a reduction in thickness along part edge 700 (denoted by T1, T2, T3, and T4). Because the melt temperature interface widens where more plies are present, the overmolded plastic will have a higher bond strength at narrower portions due to higher temperatures being induced and dissipated more rapidly at these portions. (Narrower temperature interfaces and greater heat are denoted by the symbols at the edge of each symmetrical ply.) Thus, bond strength can be highest at an end nearest a most likely failure initiation point. The result is an improved bonding interface between materials and enhanced ductile regions on the edges of hybrid structures (which can improve, e.g., impact resistance and crashworthiness).

While asymmetrical plies 711-714 are shown to be of successively larger dimensions, this successive arrangement need not be followed in alternative aspects. Lengths can vary between long and short, and nonlinear geometries employed, to provide different characteristics over a variety of geometries. Moreover, is generally shown in FIG. 7, the construction appears two dimensional. However, the dimensions of the asymmetrical plies 711-714 can likewise vary in three dimensions as needed for the geometry of the part and its intended application.

A molding machine may be configured to receive the asymmetrical plies 711-714 to produce a hybrid composite part and may include a mold cavity and a corresponding mold core. The mold may be heated by a heater implementing any known heating technology including a source of heated fluid such as hot air, hot water, steam, hot oil, and the like. The molding machine may further include an actuation mechanism associated with the mold cavity and/or the mold core. The actuation mechanism may move the mold cavity and/or the mold core such that the mold cavity engages the mold core. The actuation mechanism may be implemented as a hydraulic actuator, a pneumatic actuator, an electromagnetic actuator, or the like. The molding machine may be controlled by a controller illustrated in FIG. 8. Aspects of the disclosure may utilize an injection molding barrel/screw. An injection molding barrel/screw may include a hopper. Pellets of thermoplastic material and/or fiber-reinforced thermoplastics may be supplied by the hopper to the injection molding barrel/screw. In some aspects, a gas (blowing agent) from a gas source may be introduced. The injection molding barrel/screw may include a cylinder maintaining a screw. The screw may further include a motor or the like for moving the screw. Additionally, the injection molding barrel/screw may include at least one heater. A nozzle and/or an associated shutoff valve may include at least one heater to maintain a temperature of the pellets and/or increase the temperature of the pellets to melt the same. Other constructions associated with the injection molding barrel/screw are contemplated as well.

FIG. 8 shows a controller 850 constructed according to the principles of the disclosure. Controller 850 can be used to control, e.g., a press such as that described above with respect to FIG. 4, or a molding machine such as that described above with respect to FIG. 7. Where automated or semi-automated capability exists, e.g., using a selective perforation component and/or ply sequencing component, the processes of FIGS. 3 and/or 6 may be controlled by the controller 850 of FIG. 8, which may receive sensor outputs from one or more sensors 872, such as a temperature sensor sensing temperature, a pressure sensor sensing pressure, a position sensor sensing position, and the like. The controller 850 and I/O port 862 may be configured to control operation of a selective ply perforation component and/or ply sequencing component, and receive signals therefrom. These signals include signals from the sensors 872 and the like. In this fashion, the creation and application of selectively perforated plies and/or asymmetrical sequenced plies can be controlled and completed.

The controller 850 may include a processor 852. This processor 852 may be operably connected to a power supply 854, a memory 856, a clock 858, an analog to digital converter (A/D) 860, an input/output (I/O) port 862, and the like. The I/O port 862 may be configured to receive signals from any suitably attached electronic device and forward these signals from the A/D 860 and/or to processor 852. These signals may include signals from the sensors 872. If the signals are in analog format, the signals may proceed via the A/D 860. In this regard, the A/D 860 may be configured to receive analog format signals and convert these signals into corresponding digital format signals.

The controller 850 may include a digital to analog converter (DAC) 870 that may be configured to receive digital format signals from the processor, convert these signals to analog format, and forward the analog signals from the I/O port 862. In this manner, electronic devices configured to utilize analog signals may receive communications or be driven by the processor 852. The processor 852 may be configured to receive and transmit signals to and from the DAC 870, A/D 860 and/or the I/O port 862. The processor 852 may be further configured to receive time signals from the clock 858. In addition, the processor 852 may be configured to store and retrieve electronic data to and from the memory 856. The controller 850 may further include a display 868, an input device 864, and a read-only memory (ROM) 874. Finally, the processor 852 may include a program stored in the memory 856 executed by the processor 852 to execute the process 400 and/or the process 600 described herein.

The controller 850 and I/O port 862 may be configured to control operation of the selective perforation component and/or ply sequencing component. Additional elements used in such operations can include actuation mechanisms 814, heater 816, et cetera.

FIG. 9 illustrates an example process 900 for producing hybrid composite parts according to single stage techniques. In particular, FIG. 9 shows a molding process 900. In process box 902, a prepreg (such as that used with FIG. 10) may be inserted into a mold cavity (such as that shown in FIG. 10). This may be accomplished by a machine actuated by the controller 850 or by other processes.

In process box 904, a vacuum actuator and/or the constraining mechanisms may be actuated to hold the prepreg within the molding machine. In process box 906, the molding machine may be closed by operation of the actuation mechanism. In process box 908, heat may be applied to the prepreg from the heating and/or a cooling device.

In process box 910, the one or more mold core inserts may be retracted by the one or more actuation mechanisms. In process box 912, the main core may be retracted by the one or more actuation mechanisms. The processes 910 and 912 may occur simultaneously or in any order.

In process box 914, a thermoplastic resin and/or a reinforced polymer material is injected into the mold cavity by an injector pin. In process box 916, the part is complete and the part may be removed for further processing as needed.

The produced part using these techniques can provide fiber bundles that are un-disturbed and kept in form with the process. The temperature gradient development at local regions assists in guiding the melt resin through the ply-layups.

FIG. 10 illustrates a partial cross-sectional view of device for producing hybrid composite parts in a first configuration according to the aspects described in FIG. 9 and elsewhere herein. In particular, FIG. 10 shows a molding machine 1000 that may include a mold cavity 1002 and a corresponding mold core 1004. In one aspect, the molding machine 1000 and associated method is configured such that multiple stages are combined to utilize a single stage process to produce a hybrid composite part.

The molding machine 1000 may further include an actuation mechanism 1022 associated with the mold cavity 1002 and/or the mold core 1004. The actuation mechanism 1022 may move the mold cavity 1002 and/or the mold core 1004 such that the mold cavity 1002 engages the mold core 1004. The actuation mechanism 1022 may be implemented as a hydraulic actuator, a pneumatic actuator, an electromagnetic actuator, or the like. The actuation mechanism 1022 may be controlled by a controller illustrated in FIG. 8.

The mold core 1004 may include one or more mold core inserts 1006, 1008, 1010. As shown in FIG. 10, the mold core inserts 1006, 1008, 1010 may be arranged in and around a main core 1012. The positioning of the mold core inserts 1006, 1008, 1010 is for purposes of this example but non-limiting. The mold core inserts 1006, 1008, 1010 may be located anywhere in conjunction with the main core 1012. In one aspect, the mold core inserts 1006, 1008, 1010 may be located along the periphery of the main core 1012. In another aspect, the mold core inserts 1006, 1008, 1010 may be located within the main core 1012. In the aspect shown in FIG. 10, the mold core inserts 1006, 1008, 1010 may be located along the periphery (1006, 1010) of the main core 1012 and may be located internally (1008) to the main core 1012. Moreover, although three mold core inserts 1006, 1008, 1010 are illustrated in FIG. 10, any number of mold core inserts may be utilized. Additionally, although a single main core 1012 is illustrated in FIG. 10, any number of main cores may be utilized.

The mold core inserts 1006, 1008, 1010 and the main core 1012 are configured to move with respect to the mold core 1004 by operation of one or more actuation mechanisms 1020. In one aspect, there may be a single actuation mechanism 1020 for moving the mold core inserts 1006, 1008, 1010 and the main core 1012. In another aspect, there may be an actuation mechanism 1020 for moving the mold core inserts 1006, 1008, 1010 and another actuation mechanism 1020 for moving the main core 1012. In another aspect, there may be an actuation mechanism 1020 for moving each of the mold core inserts 1006, 1008, 1010 and another actuation mechanism 1020 for moving the main core 1012. The one or more actuation mechanisms 1020 may be implemented as a hydraulic actuator, a pneumatic actuator, an electromagnetic actuator, or the like. The one or more actuation mechanisms 1020 may be controlled by the controller illustrated in FIG. 8.

In one aspect, the mold core inserts 1006, 1008, 1010 and the main core 1012 may have a textured surface that engages a prepreg 1016. In one aspect, the prepreg 1016 may include a stack of laminate plies. In one aspect, the mold core inserts 1006, 1008, 1010 may have a textured surface that engages the prepreg 1016. In one aspect, the main core 1012 may have a textured surface that engages the prepreg 1016. The textured surface that engages the prepreg 1016 subsequently forms a textured surface on the prepreg 1016 during production of a subsequent preform. The textured surface on the prepreg 1016 may improve adhesion to a subsequent molded plastic structure and/or other benefits. The textured surface may include a roughened surface, diamond, ridge, groove, and the like features.

The mold cavity 1002 may be configured to receive the prepreg 1016. In one aspect, the prepreg 1016 may be made from a first fiber-reinforced polymer material having a two-dimensional, three-dimensional, woven, co-mingled and/or similar structure. In one aspect, the prepreg 1016 may be made from a first fiber-reinforced polymer material as defined below. In one aspect, the prepreg 1016 may also include a first thermoplastic resin as defined below. In one aspect, the prepreg 1016 may include a thermoset material. In one aspect, the prepreg 1016 may include ply layups.

The molding machine 1000 may further include an injector pin 1014 configured to inject a second thermoplastic resin and/or a second reinforced polymer material into the mold cavity 1002. In one aspect, the second thermoplastic resin may be any type of thermoplastic resin. In one aspect, the second thermoplastic resin may be a thermoplastic resin as defined below. In one aspect, the injector pin 1014 may receive the second thermoplastic resin from an injection molding barrel/screw. In one aspect, the second reinforced polymer material may be any type of reinforced polymer material. In one aspect, the second reinforced polymer material may be reinforced polymer material as defined below. In one aspect, the injector pin 1014 may receive the second reinforced polymer material from an injection molding barrel/screw.

As further shown in FIG. 10, the prepreg 1016 may be arranged in the mold cavity 1002. In one aspect, the prepreg 1016 may be arranged in the mold cavity 1002 with the help of a robot that may be controlled by the controller illustrated in FIG. 8. In one aspect, the prepreg 1016 may be arranged in the mold cavity 1002 with the help of a machine that may be controlled by the controller illustrated in FIG. 8. In one aspect, the prepreg 1016 may be arranged in the mold cavity 1002 by other processes.

In one aspect, the prepreg 1016 may be located in the molding machine 1000 and clamped utilizing mechanical methods, vacuum clamps, and the like. In one aspect, mechanical methods may be utilized. In this aspect, the prepreg 1016 is placed in the molding machine 1000 parting surface by the robot and the mold core inserts 1006, 1008, 1010 from the mold core 1004 and the mold cavity 1002 can be used for clamping. The mold core inserts 1006, 1008, 1010 clamping the prepreg 1016 may move synchronously with the rest of the mold core 1004 and the mold cavity 1002 movement for forming, lamination and over molding. Further, the clamping surface of the mold core inserts 1006, 1008, 1010 can be textured as noted above to increase the friction with fabric for efficient locating.

In another aspect, vacuum clamps may be utilized. In this aspect, one or more vacuum vents 1024 can be located in the mold cavity 1002 or any part of the molding machine 1000. For example the mold cavity 1002 can have vacuum vents 1024 which hold the prepreg 1016 in its place during the forming process. Additionally, the vacuum vents 1024 may include conduits that connect to a vacuum actuator 1026 that may include a vacuum source.

In one aspect, the prepreg 1016 may include features to ensure a proper location in the mold cavity 1002. In this regard, the mold cavity 1002 may have corresponding structure to engage the features arranged in the prepreg 1016. In one aspect, the prepreg 1016 may include locator holes to ensure the proper location in the mold cavity 1002. In this regard, the mold cavity 1002 may have corresponding structure to engage the locator holes arranged in the prepreg 1016.

In one aspect, the injector pin 1014 may be configured with features to engage the prepreg 1016. In one aspect, the injector pin 1014 may include a gripping feature that engages the prepreg 1016 to grip and hold the prepreg 1016. In one aspect, the injector pin 1014 may include a feature 1018 that engages a locator hole in the prepreg 1016 to hold the prepreg 1016.

Further in the first configuration shown in FIG. 10, the mold core inserts 1006, 1008, 1010, and the main core 1012 may be fully extended by the one or more actuation mechanisms 1020 in preparation for closure of the mold. Thereafter, the mold cavity 1002 and mold core 1004 may be moved to close the molding machine 1000 to the configuration shown in FIG. 2 with the actuation mechanism 1022. Alternatively, the mold cavity 1002 and mold core 1004 may be moved to close the molding machine 1000 to the configuration shown in FIG. 2 with actuation mechanism 1022. Thereafter the mold core inserts 1006, 1008, 1010, and the main core 1012 may be fully extended by the one or more actuation mechanisms 1020.

In other arrangements, mold cores or other components of molding machine 1000 can be repositioned to accommodate the aspects described in FIG. 9. In this manner, single stage lamination and overmolding can be completed.

While this disclosure describes the use of selective perforation of plies and asymmetrical edge ply sequencing, these techniques can be used in combination. For example, plies used in asymmetrical edge ply sequencing can include selective perforation features and/or selective perforation patterns. Plies stacked including selective perforation features and/or selective perforation patterns can be of varying dimensions to utilize concepts relating to asymmetrical edge ply sequencing. A laminate part formed using selective perforation may be overmolded using asymmetrical edge ply sequencing, or a composite part using asymmetrical edge ply sequencing may be laminated using selectively perforated plies.

Fiber-reinforced polymer material which can be used with aspects described herein may include a laminate made from at least one of a uni-directional tape, a prepack roll, a two-dimensional fabric, a three-dimensional fabric, commingled fibers, a film, a woven fabric, and a non-woven fabric. Such fiber-reinforced polymer material may be made through a melt process, from a chemical solution, from a powder, by film impregnation, or the like. The woven and non-woven fabric materials may be made from the first thermoplastic resin. In one aspect, such fiber-reinforced polymer material may include a first thermoplastic resin including one or more commingled fibers, a film, a powder, and/or the like.

Specific non-limiting examples of suitable first thermoplastic resins include polyacetal, polyacrylic, styrene acrylonitrile, acrylonitrile-butadiene-styrene (ABS), polycarbonate, polystyrene, polyethylene, polyphenylene ether, polypropylene, polyethylene terephthalate, polybutylene terephthalate, Nylons (Nylon-6, Nylon-6/6, Nylon-6/10, Nylon-6/12, Nylon-11 or Nylon-12, for example), polyamideimide, polyarylate, polyurethane, ethylene propylene diene rubber (EPR), ethylene propylene diene monomer (EPDM), polyarylsulfone, polyethersulfone, polyphenylene sulfide, polyvinyl chloride, polysulfone, polyetherimide, polytetrafluoroethylene, fluorinated ethylene propylene, perfluoroalkoxyethylene, polychlorotrifluoroethylene, polyvinylidene fluoride, polyvinyl fluoride, polyetherketone, polyether ether ketone (PEEK), liquid crystal polymers and mixtures comprising any one of the foregoing thermoplastics. The thermoplastic resin may also be propriety resin materials, such as Noryl GTX™, which is a blend of polyamide and modified polyphenylene ether, or Thermocomp RC008™, which is a Nylon 66 resin. It is anticipated that any thermoplastic resin may be used in the present disclosure that is capable of being sufficiently softened by heat to permit fusing and/or molding without being chemically or thermally decomposed.

An alternative or complementary fiber-reinforced polymer material may be selected from the non-exhaustive list of the fiber-reinforced polymer material described herein and equivalents or known alternatives. A thermoplastic resin may be selected from the non-exhaustive list of first thermoplastic resins described above. Multiple fiber-reinforced polymer materials and multiple thermoplastic resins may be used in the same or different aspects. Although a second thermoplastic resin may be different than a first thermoplastic resin, it may be desirable that the first thermoplastic resin and the second thermoplastic resin share a common polymeric material. The specific materials mentioned above are merely described for exemplary purposes.

Fiber-reinforced polymer material herein may also include at least one type of continuous fiber material designed to help provide strength to a laminate. Fibers suitable for use in the disclosure include glass fibers, carbon fibers, graphite fibers, synthetic organic fibers, particularly high modulus organic fibers such as para- and meta-aramid fibers, nylon fibers, polyester fibers, or any of the thermoplastic resins mentioned above that are suitable for use as fibers, natural fibers such as hemp, sisal, jute, flax, coir, kenaf and cellulosic fibers, mineral fibers such as basalt, mineral wool (e.g., rock or slag wool), Wollastonite, alumina silica, and the like, or mixtures thereof, metal fibers, metalized natural and/or synthetic fibers, ceramic fibers, or mixtures thereof. In one aspect, the fibers selected for the first fiber-reinforced polymer material of a laminate are continuous carbon-fibers.

Articles produced according to the disclosure include, for example, computer and business machine housings, home appliances, trays, plates, handles, helmets, automotive parts such as instrument panels, cup holders, glove boxes, interior coverings and the like. In various further aspects, formed articles include, but are not limited to, food service items, medical devices, animal cages, electrical connectors, enclosures for electrical equipment, electric motor parts, power distribution equipment, communication equipment, computers and the like, including devices that have molded in snap fit connectors. In a further aspect, articles of the present disclosure include exterior body panels and parts for outdoor vehicles and devices including automobiles, protected graphics such as signs, outdoor enclosures such as telecommunication and electrical connection boxes, and construction applications such as roof sections, wall panels and glazing. Multilayer articles made of the disclosed polycarbonates particularly include articles which will be exposed to ultraviolet UV-light, whether natural or artificial, during their lifetimes, and most particularly outdoor articles; i.e., those intended for outdoor use. Suitable articles are exemplified by enclosures, housings, panels, and parts for outdoor vehicles and devices; enclosures for electrical and telecommunication devices; outdoor furniture; aircraft components; boats and marine equipment, including trim, enclosures, and housings; outboard motor housings; depth finder housings, personal water-craft; jet-skis; pools; spas; hot-tubs; steps; step coverings; building and construction applications such as glazing, roofs, windows, floors, decorative window furnishings or treatments; treated glass covers for pictures, paintings, posters, and like display items; wall panels, and doors; protected graphics; outdoor and indoor signs; enclosures, housings, panels, and parts for automatic teller machines (ATM); enclosures, housings, panels, and parts for lawn and garden tractors, lawn mowers, and tools, including lawn and garden tools; window and door trim; sports equipment and toys; enclosures, housings, panels, and parts for snowmobiles; recreational vehicle panels and components; playground equipment; articles made from plastic-wood combinations; golf course markers; utility pit covers; computer housings; desk-top computer housings; portable computer housings; lap-top computer housings; palm-held computer housings; monitor housings; printer housings; keyboards; facsimile machine housings; copier housings; telephone housings; mobile phone housings; radio sender housings; radio receiver housings; light fixtures; lighting appliances; network interface device housings; transformer housings; air conditioner housings; cladding or seating for public transportation; cladding or seating for trains, subways, or buses; meter housings; antenna housings; cladding for satellite dishes; coated helmets and personal protective equipment; coated synthetic or natural textiles; coated photographic film and photographic prints; coated painted articles; coated dyed articles; coated fluorescent articles; coated articles; and like applications.

In one aspect, the parts can include articles including the disclosed glass fiber filled polymeric materials. In a further aspect, the article including the disclosed glass fiber filled polymeric materials can be used in automotive applications. In a yet further aspect, the article includes the disclosed glass fiber filled polymeric materials can be selected from instrument panels, overhead consoles, interior trim, center consoles, panels, quarter panels, rocker panels, trim, fenders, doors, deck lids, trunk lids, hoods, bonnets, roofs, bumpers, fascia, grilles, minor housings, pillar appliques, cladding, body side moldings, wheel covers, hubcaps, door handles, spoilers, window frames, headlamp bezels, headlamps, tail lamps, tail lamp housings, tail lamp bezels, license plate enclosures, roof racks, and running boards. In an even further aspect, the article including the disclosed glass fiber filled polymeric materials can be selected from mobile device exteriors, mobile device covers, enclosures for electrical and electronic assemblies, protective headgear, buffer edging for furniture and joinery panels, luggage and protective carrying cases, small kitchen appliances, and toys.

In one aspect, the parts can include electrical or electronic devices including the disclosed glass fiber filled polymeric materials. In a further aspect, the electrical or electronic device can be a cellphone, a MP3 player, a computer, a laptop, a camera, a video recorder, an electronic tablet, a pager, a hand receiver, a video game, a calculator, a wireless car entry device, an automotive part, a filter housing, a luggage cart, an office chair, a kitchen appliance, an electrical housing, an electrical connector, a lighting fixture, a light emitting diode, an electrical part, or a telecommunications part. modifications in the scope of the appended claims. These examples given above are merely illustrative and are not meant to be an exhaustive list of all possible designs, aspects, applications or modifications of the disclosure.

## Claims

1. A laminate for use in forming an overmolded part, the laminate having a plurality of plies arranged in layers, **characterized by**:
a first ply of the plurality of plies including a first selective perforation feature of a first selective perforation pattern, wherein the first selective perforation feature is related to a geometry of the part for overmolding; and
a second ply of the plurality of the plurality of plies arranged adjacent the first ply, wherein the second ply includes one of an unperforated construction and a second selective perforation feature, and wherein the second selective perforation feature does not match the first selective perforation feature.

2. The laminated part of claim 1, wherein the first selective perforation feature and the second selective perforation feature define one of a staggered perforation arrangement, a successive perforation arrangement, or a random perforation arrangement.

3. The laminated part of one of claims 1 to 2, further comprising a third ply of the plurality of plies adjacent the second ply, wherein the third ply includes a third selective perforation feature, and wherein the third selective perforation feature matches the first selective perforation feature.

4. The laminated part of one of claims 1 to 2, further comprising a third ply of the plurality of plies adjacent the second ply, wherein the third ply includes a third selective perforation feature of a third selective perforation pattern.

5. The laminated part of one of claims 1 to 4, wherein the first ply and the second ply are sized for asymmetrical edge ply sequencing.

6. The laminated part of one of claims 1 to 5, further comprising an overmolded thermoplastic portion structured and arranged on the plurality of plies,
a. wherein the first ply and the second ply are sized for asymmetrical edge ply sequencing.

7. A method for producing a laminate for forming an overmolded part, the method comprising:
providing a first ply of a plurality of plies arranged in layers;
the method **characterized by**
perforating the first ply to form a first selective perforation feature according to a first selective perforation pattern, wherein the first selective perforation feature is related to a geometry of the part for overmolding; and
arranging a second ply of the plurality of plies adjacent to the first ply, wherein the second ply includes one of an unperforated construction and a second selective perforation feature.

8. The method of claim 7, further comprising:
a. arranging the plurality of plies in a press;
b. heating the press; and
c. applying pressure with the press to produce a laminate from the plurality of plies.

9. The method of claim 8, comprising:
a. providing a template defining the first selective perforation pattern; and
b. aligning the template to the first ply before perforating the first ply.

10. The method of one of claims 7 or 8, comprising:
a. perforating the second ply among the plurality of plies to create the second selective perforation feature according to a second selective perforation pattern, wherein the second selective perforation pattern does not match the first selective perforation pattern.

11. The method of one of claims 7 to 10, comprising:
a. providing a third ply among the plurality of plies, wherein the third ply is adjacent to the second ply; and
b. perforating the third ply to create a third selective perforation feature according to a third selective perforation pattern, wherein the third selective perforation pattern does not match any perforation of the second ply.

12. The method of one of claims 7 to 11, comprising applying the plurality of plies to a part geometrically coordinated with the first selective perforation pattern.

13. The method of one of claims 7 to 12, further comprising arranging the plurality of plies such that the plurality of plies has two or more edge dimensions.

14. The method of one of claims 7 to 13, further comprising:
a. arranging the plurality of plies such that the plurality of plies have two or more edge dimensions; and
b. overmolding a thermoplastic portion on the plurality of plies.

15. A method of producing a hybrid part, the method comprising:
providing a plurality of sequenced plies including a first ply and a second ply adjacent the first ply;
the method **characterized by**:
shaping the first ply to a first dimension based on a geometry of the hybrid part, wherein the first dimension has a first end length;
shaping the second ply to a second dimension based on the geometry of the hybrid part, wherein the second dimension has a second end length unequal to the first end length; and
overmolding a thermoplastic material onto the first ply and second ply.

16. The method of claim 15, wherein the first end length extends further along a surface of the hybrid part than the second end length.

17. The method of one of claims 15 or 16, further comprising shaping a third ply adjacent the second ply among the plurality of sequenced plies to a third dimension based on the geometry of the part for overmolding, wherein the third dimension includes a third end length unequal the second end length.

18. The method of one of claims 15 to 17, wherein the first end length and the second end length extend over a nonlinear portion of the hybrid part.

19. The method of one of claims 15 to 18, wherein at least one of the first ply and the second ply include a selective perforation feature.

20. The method of one of claims 15 to 19, further comprising:
a. heating the plurality of sequenced plies; and
b. overmolding the thermoplastic material onto the plurality of sequenced plies.

## Patentansprüche

1. Laminat zur Verwendung beim Bilden eines überspritzten Teils, wobei das Laminat mehrere Lagen aufweist, die in Schichten angeordnet sind, **gekennzeichnet durch**:
eine erste Lage einer Vielzahl von Lagen, einschließlich eines ersten selektiven Perforationsmerkmals eines ersten selektiven Perforationsmusters, wobei sich das erste selektive Perforationsmerkmal auf eine Geometrie des Teils zum Überspritzen bezieht; und
eine zweite Lage einer Vielzahl von Lagen, die neben der ersten Lage angeordnet ist, wobei die zweite Lage eine nicht perforierte Konstruktion oder ein zweites selektives Perforationsmerkmal aufweist und wobei das zweite selektive Perforationsmerkmal nicht mit dem ersten selektiven Perforationsmerkmal übereinstimmt.

2. Laminiertes Teil nach Anspruch 1, wobei das erste selektive Perforationsmerkmal und das zweite selektive Perforationsmerkmal eine von einer gestapelten Perforationsanordnung, einer aufeinanderfolgenden Perforationsanordnung oder einer zufälligen Perforationsanordnung definieren.

3. Laminiertes Teil nach einem der Ansprüche 1 bis 2, ferner umfassend eine dritte Lage einer Vielzahl von Lagen neben der zweiten Lage, wobei die dritte Lage ein drittes selektives Perforationsmerkmal aufweist und wobei das dritte selektive Perforationsmerkmal mit dem ersten selektiven Perforationsmerkmal übereinstimmt.

4. Laminiertes Teil nach einem der Ansprüche 1 bis 2, ferner umfassend eine dritte Lage einer Vielzahl von Lagen neben der zweiten Lage, wobei die dritte Lage ein drittes selektives Perforationsmerkmal eines dritten selektiven Perforationsmusters aufweist.

5. Laminiertes Teil nach einem der Ansprüche 1 bis 4, wobei die erste Lage und die zweite Lage für eine asymmetrische Kantenlagenfolge dimensioniert sind.

6. Laminiertes Teil nach einem der Ansprüche 1 bis 5, ferner umfassend einen überspritzten thermoplastischen Abschnitt, der auf einer Vielzahl von Lagen strukturiert und angeordnet ist,
a. wobei die erste Lage und die zweite Lage für eine asymmetrische Kantenlagenfolge dimensioniert sind.

7. Verfahren zur Herstellung eines Laminats zur Bildung eines überspritzten Teils, wobei das Verfahren Folgendes umfasst:
Bereitstellen einer ersten Lage einer Vielzahl von Lagen, die in Schichten angeordnet ist;
wobei das Verfahren durch Folgendes gekennzeichnet ist Perforieren der ersten Lage zum Bilden eines ersten selektiven Perforationsmerkmals gemäß einem ersten selektiven Perforationsmuster, wobei sich das erste selektive Perforationsmerkmal auf eine Geometrie des Teils zum Überspritzen bezieht; und
Anordnen einer zweiten Lage aus der Vielzahl von Lagen neben der ersten Lage, wobei die zweite Lage eine nicht perforierte Konstruktion oder ein zweites selektives Perforationsmerkmal aufweist.

8. Verfahren nach Anspruch 7, ferner umfassend:
a. Anordnen der Vielzahl von Lagen in einer Presse;
b. Erhitzen der Presse; und
c. Ausüben von Druck mit der Presse, um ein Laminat aus der Vielzahl von Lagen herzustellen.

9. Verfahren nach Anspruch 8, umfassend:
a. Bereitstellen einer Schablone, die das erste selektive Perforationsmuster definiert; und
b. Ausrichten der Schablone auf die erste Lage, bevor die erste Lage perforiert wird.

10. Verfahren nach einem der Ansprüche 7 oder 8, umfassend:
a. Perforieren der zweiten Lage aus der Vielzahl von Lagen, um das zweite selektive Perforationsmerkmal gemäß einem zweiten selektiven Perforationsmuster zu erzeugen, wobei das zweite selektive Perforationsmuster nicht mit dem ersten selektiven Perforationsmuster übereinstimmt.

11. Verfahren nach einem der Ansprüche 7 bis 10, umfassend:
a. Bereitstellen einer dritten Lage aus der Vielzahl von Lagen, wobei die dritte Lage neben der zweiten Lage ist; und
b. Perforieren der dritten Lage, um ein drittes selektives Perforationsmerkmal gemäß einem dritten selektiven Perforationsmuster zu erzeugen, wobei das dritte selektive Perforationsmuster mit keiner Perforation der zweiten Lage übereinstimmt.

12. Verfahren nach einem der Ansprüche 7 bis 11, umfassend das Aufbringen der Vielzahl von Lagen auf einen Teil, der geometrisch auf das erste selektive Perforationsmuster abgestimmt ist.

13. Verfahren nach einem der Ansprüche 7 bis 12, ferner umfassend das Anordnen der Vielzahl von Lagen, so dass die Vielzahl von Lagen zwei oder mehr Kantenabmessungen aufweist.

14. Verfahren nach einem der Ansprüche 7 bis 13, ferner umfassend:
a. Anordnen der Vielzahl von Lagen, so dass die Vielzahl von Lagen zwei oder mehr Kantenabmessungen aufweist; und
b. Überspritzen eines thermoplastischen Abschnitts auf die Vielzahl von Lagen.

15. Verfahren zur Herstellung eines Hybridteils, wobei das Verfahren Folgendes umfasst:
Bereitstellen einer Vielzahl von aufeinanderfolgenden Lagen, einschließlich einer ersten Lage und einer zweiten Lage neben der ersten Lage;
wobei das Verfahren durch Folgendes gekennzeichnet ist:
Formen der ersten Lage nach einer ersten Abmessung basierend auf einer Geometrie des Hybridteils, wobei die erste Abmessung eine erste Endlänge aufweist;
Formen der zweiten Lage nach einer zweiten Abmessung basierend auf der Geometrie des Hybridteils, wobei die zweite Abmessung eine zweite Endlänge aufweist, die nicht gleich der ersten Endlänge ist; und
Überspritzung eines thermoplastischen Materials auf die erste Lage und die zweite Lage.

16. Verfahren nach Anspruch 15, wobei sich die erste Endlänge ferner entlang einer Oberfläche des Hybridteils weiter erstreckt als die zweite Endlänge.

17. Verfahren nach einem der Ansprüche 15 oder 16, ferner umfassend das Formen einer dritten Lage neben der zweiten Lage aus der Vielzahl von aufeinanderfolgenden Lagen nach einer dritten Abmessung basierend auf der Geometrie des Teils zum Überspritzen, wobei die dritte Abmessung eine dritte Endlänge umfasst, die ungleich der zweiten Endlänge ist.

18. Verfahren nach einem der Ansprüche 15 bis 17, wobei sich die erste Endlänge und die zweite Endlänge über einen nichtlinearen Abschnitt des Hybridteils erstrecken.

19. Verfahren nach einem der Ansprüche 15 bis 18, wobei wenigstens die erste Lage und die zweite Lage ein selektives Perforationsmerkmal aufweisen.

20. Verfahren nach einem der Ansprüche 15 bis 19, ferner umfassend:
a. Erhitzen der Vielzahl von aufeinanderfolgenden Lagen; und
b. Überspritzen des thermoplastischen Materials auf die Vielzahl von aufeinanderfolgenden Lagen.

## Revendications

1. Stratifié destiné à être utilisé pour former une pièce surmoulée, le stratifié ayant une pluralité de plis disposés en couches, **caractérisé par :**
un premier pli de la pluralité de plis comprenant une première caractéristique de perforation sélective d'un premier motif de perforation sélective, la première caractéristique de perforation sélective étant liée à une géométrie de la pièce à surmouler ; et
un deuxième pli de la pluralité de plis positionné de manière adjacente au premier pli, le deuxième pli comprenant une structure non perforée et une deuxième caractéristique de perforation sélective, et la deuxième caractéristique de perforation sélective ne coïncidant pas avec la première caractéristique de perforation sélective.

2. Pièce stratifiée selon la revendication 1, dans laquelle la première caractéristique de perforation sélective et la deuxième caractéristique de perforation sélective définissent l'une parmi une disposition de perforations en quinconce, une disposition de perforations successives ou une disposition de perforations aléatoires.

3. Pièce stratifiée selon l'une des revendications 1 à 2, comprenant en outre un troisième pli de la pluralité de plis, adjacent au deuxième pli, le troisième pli comprenant une troisième caractéristique de perforation sélective, et la troisième caractéristique de perforation sélective coïncidant avec la première caractéristique de perforation sélective.

4. Pièce stratifiée selon l'une des revendications 1 à 2, comprenant en outre un troisième pli de la pluralité de plis, adjacent au deuxième pli, le troisième pli comprenant une troisième caractéristique de perforation sélective d'un troisième motif de perforation sélective.

5. Pièce stratifiée selon l'une des revendications 1 à 4, dans laquelle le premier pli et le deuxième pli sont dimensionnés pour un séquençage asymétrique des plis de bord.

6. Pièce stratifiée selon l'une des revendications 1 à 5, comprenant en outre une partie thermoplastique surmoulée structurée et disposée sur la pluralité de plis,
a. le premier pli et le deuxième pli étant dimensionnés pour un séquençage asymétrique de pli de bord.

7. Procédé de production d'un stratifié pour former une pièce surmoulée, le procédé comprenant l'étape consistant :
à fournir un premier pli d'une pluralité de plis disposés en couches ;
procédé **caractérisé par** les étapes consistant
à perforer le premier pli pour former une première caractéristique de perforation sélective selon un premier motif de perforation sélective, la première caractéristique de perforation sélective étant liée à une géométrie de la pièce à surmouler ; et
à positionner un deuxième pli de la pluralité de plis, adjacent au premier pli, le deuxième pli comprenant l'une parmi une construction non perforée et une deuxième caractéristique de perforation sélective.

8. Procédé selon la revendication 7, comprenant en outre les étapes consistant :
a. à positionner la pluralité de plis dans une presse ;
b. à chauffer la presse ; et
c. à appliquer une pression avec la presse pour produire un stratifié à partir de la pluralité de plis.

9. Procédé selon la revendication 8, comprenant les étapes consistant :
a. à fournir un gabarit définissant le premier motif de perforation sélective ; et
b. à aligner le gabarit sur le premier pli avant la perforation du premier pli.

10. Procédé selon l'une des revendications 7 ou 8, comprenant l'étape consistant :
a. à perforer le deuxième pli parmi la pluralité de plis pour créer la deuxième caractéristique de perforation sélective selon un deuxième motif de perforation sélective, le deuxième motif de perforation sélective ne coïncidant pas avec le premier motif de perforation sélective.

11. Procédé selon l'une des revendications 7 à 10, comprenant les étapes consistant :
a. à fournir un troisième pli parmi la pluralité de plis, le troisième pli étant adjacent au deuxième pli ; et
b. à perforer le troisième pli pour créer une troisième caractéristique de perforation sélective selon un troisième motif de perforation sélective, le troisième motif de perforation sélective ne coïncidant avec aucune perforation du deuxième pli.

12. Procédé selon l'une des revendications 7 à 11, comprenant l'étape consistante à appliquer la pluralité de plis à une pièce coordonnée géométriquement avec le premier motif de perforation sélective.

13. Procédé selon l'une des revendications 7 à 12, comprenant en outre l'étape consistant à positionner la pluralité de plis de telle sorte que la pluralité de plis a deux dimensions de bord ou plus.

14. Procédé selon l'une des revendications 7 à 13, comprenant en outre les étapes consistant :
a. à positionner la pluralité de plis de telle sorte que la pluralité de plis a deux dimensions de bord ou plus ; et
b. à surmouler une portion thermoplastique sur la pluralité de plis.

15. Procédé de production d'une pièce hybride, le procédé comprenant les étapes consistant
à fournir une pluralité de plis séquencés comprenant un premier pli et un deuxième pli adjacent au premier pli ;
procédé **caractérisé par** les étapes consistant
à mettre en forme le premier pli à une première dimension basée sur une géométrie de la pièce hybride, la première dimension ayant une première longueur d'extrémité ;
à mettre en forme le deuxième pli à une deuxième dimension basée sur la géométrie de la pièce hybride, la deuxième dimension ayant une deuxième longueur d'extrémité différente de la première longueur finale ; et
à surmouler un matériau thermoplastique sur le premier pli et le deuxième pli.

16. Procédé selon la revendication 15, dans lequel la première longueur d'extrémité s'étend plus loin le long d'une surface de la pièce hybride que la deuxième longueur d'extrémité.

17. Procédé selon l'une des revendications 15 ou 16, comprenant en outre l'étape consistant à mettre en forme un troisième pli adjacent au deuxième pli parmi la pluralité de plis séquencés à une troisième dimension basée sur la géométrie de la pièce à surmouler, la troisième dimension comprenant une troisième longueur d'extrémité différente de la deuxième longueur d'extrémité.

18. Procédé selon l'une des revendications 15 à 17, dans lequel la première longueur d'extrémité et la deuxième longueur d'extrémité s'étendent sur une portion non linéaire de la pièce hybride.

19. Procédé selon l'une des revendications 15 à 18, dans lequel au moins l'un des premier et deuxième plis comprend une caractéristique de perforation sélective.

20. Procédé selon l'une des revendications 15 à 19, comprenant en outre les étapes consistant
a. à chauffer la pluralité de plis séquencés ; et
b. à surmouler le matériau thermoplastique sur la pluralité de plis séquencés.
